(19) Europäisches Patentamt
European Patent Office
Office européen des brevets

(11) EP 0 767 216 A1

(12) EUROPEAN PATENT APPLICATION

(43) Date of publication:
09.04.1997 Bulletin 1997/15

(51) Int. Cl.$^6$: C08L 83/04

(21) Application number: 96114513.3

(22) Date of filing: 11.09.1996

(84) Designated Contracting States:
DE FR GB IT

(30) Priority: 29.09.1995 US 536333

(71) Applicant: DOW CORNING CORPORATION
Midland, Michigan 48686-0994 (US)

(72) Inventor: Schmidt, Randall Gene
Midland, Michigan 48642 (US)

(74) Representative: Fleischer, Holm Herbert, Dr. et al
Patentanwälte Dr. H.-G. Sternagel,
Dr. H. Fleischer,
Dr. H. Dörries,
Sander Aue 30
51465 Bergisch Gladbach (DE)

# (54) High strength silicone resin/fluid alloy compositions and method of making

(57) Silicone resin/fluid alloy compositions that exhibit high strength and toughness over a predetermined service temperature range are prepared by blending functional resins and fluids and then cross-linking in a manner such that unusually high ultimate tensile strengths, shear loss moduli and loss tangents are obtained. The desirable mechanical properties are dependent upon the number average molecular weights of the resin and fluid, the ratio of resin/fluid and control of the cross-link density between the resin and fluid.



Printed by Rank Xerox (UK) Business Services
2.14.2/3.4

## Description

The present invention relates generally to polymer alloy compositions of the silicone resin/fluid variety. In our invention, the mechanical properties of the alloy, such as ultimate tensile strength, shear loss modulus and toughness are surprisingly controlled by the number average molecular weights of the resin and fluid, the ratio of resin/fluid and the cross-link density of the alloy.

Silicone polymer alloy compositions, comprising silicone resins and fluids, are well known in the art. Such compositions have a broad range of applications, including uses as molding compounds, adhesive formulations and additives or bases for paints and coatings.

As used herein, the term "silicone fluid" describes a substantially linear silicone polymer, for example polydimethylsiloxane (PDMS). The term "silicone fluid" is used in this sense even if the linear polymer contains a minor amount of branched chains or if, at room temperature, the material appears as more of a gum or solid. In other words, this term describes only the predominantly linear characteristics of the polymer. It will be understood that silicone fluids may also include reactive or functional groups.

As used herein, the term "resin" describes a silicone composition wherein the molecular structure is arranged in a predominantly three dimensional network. Thus, the term "silicone resin" is used to distinguish the composition from silicone fluids, cyclosiloxanes, silanes and silazanes. These resins may also include functional or reactive groups. Silicone resins are well known in the art and are generally considered as soluble or dispersible in organic solvents, such as benzene and toluene, and low molecular weight siloxanes, such as octamethyltetracyclosiloxane.

Finally, the term "alloy" is used herein to describe compositions comprised primarily of a combination of silicone fluids and resins. When used in a strictly metallurgical sense, the term "alloy" implies the fusion of two or more constituents, at least one of which is metallic, to achieve physical properties that are not independently exhibited by either constituent alone. Thus, the term "alloy," as used in a broader sense herein, describes the fusion or blending of two or more dissimilar silicone polymer constituents to achieve physical properties that are not independently exhibited by either a resin or fluid.

US-A 5,034,061 discloses a silicone resin/fluid polymer alloy adapted to form a transparent, shatter-resistant coating. The alloy composition includes a silicone resin copolymer consisting of $R_3SiO_{1/2}$ and $SiO_{4/2}$ units with unsaturated olefinic functional R groups, a polydiorganosiloxane fluid with vinyl functionality, an organopolysiloxane crosslinker having hydrogen functionality and a catalyst. This composition is particularly adapted for use in coating incandescent glass lamps.

EP-A2 0 393 426 teaches silicone resin/fluid alloy compositions that have utility as pressure sensitive adhesives.

The constituents of EP-A2 0 393 426 are essentially identical to those disclosed in US-A 5,034,061. The alloy compositions differ, however, in the relative proportions of those constituents. Thus, the compositions of the above teachings can be fairly viewed as belonging to a common binary alloy system. Neither document, however, contains any explicit teaching for controlling the mechanical properties of the alloy composition, such as the tensile and tear strengths, shear loss modulus or toughness.

US-A 4,521,471 describes a silicone resin/fluid alloy useful as a pressure sensitive adhesive in the construction of an article for removing ink from substrates. This alloy composition utilizes an MQ resin, which consists of monofunctional (M) and tetrafunctional (Q) siloxane units and a silanol-terminated PDMS gum. Those skilled in the art will recognize that so-called MQ resins include a fair amount of residual silanol sites. These sites can be used to chemically bond the silanol-terminated PMDS fluid to the resin through a condensation reaction. While illustrating another application for silicone resin/fluid alloy compositions, the latter document does not contain any explicit teaching for controlling the mechanical properties of the alloy composition.

CA-A 691,206 claims the use of silica-filled silicone resin/fluid alloys for damping vibrations. The ability of this composition to dampen vibrations is illustrated through the measurement of the ratio of G' (the elastic shear modulus), to G" (the shear loss modulus). The magnitude of this ratio is indicated as being inversely proportional to the ability of the alloy material to absorb vibration. The ratio of G'/G" of the subject alloys is compared to that of compositions prepared without a resin constituent.

As illustrated by CA-A 691,206, it has long been known in the art that the use of silica fillers in silicone resin and rubber compositions can dramatically increase the toughness of the compositions. The utilization of a silica filler, however, causes the alloys of this document to lose the property of optical clarity. Furthermore, it does not include any explicit teaching for controlling the mechanical properties of the alloy composition through the chemistry and structure of the resin and fluid constituents.

While the above publications and patents disclose a number of silicone resin/fluid alloy compositions, none describe, demonstrate nor claim the control of the physical properties of the polymer alloy systems to enable one to selectively produce tough, high strength compositions, without the addition of a filler.

Thus, it is highly desirable to provide tough, high strength silicone resin/fluid alloy compositions that do not depend upon the addition of a filler, such as silica. Such compositions could be used in applications requiring optical clarity, for instance as interlayers for glazing. Furthermore, such tough, high strength silicone resin/fluid alloys would have utility

in the manufacture of molded articles such as keyboard spring pads or as extruded articles such as surgical tubing.

The present invention solves the problems of the prior art since it teaches the formulation of silicone resin/fluid alloy compositions, adapted for use over a predetermined service temperature range, and which alloy compositions exhibit high strength and toughness within that predetermined temperature range, without the addition of silica or some other inorganic filler. It will be understood that the addition of an inorganic filler is not prohibited in the practice of the present invention, but may be avoided should the property of optical clarity be of importance.

The high strength, tough, silicone resin/fluid alloys of the present invention are made utilizing several known cure systems, making them ideal for casting or extrusion or compression, and injection molding of various articles of manufacture.

Those skilled in the art will recognize that the mechanical properties of materials, in particular tensile strength and toughness, are temperature dependent. It will also be recognized that many articles of manufacture are designed for use over a variety of temperature ranges. The materials from which such articles are fabricated are generally selected to exhibit the desired peak mechanical properties within a predetermined service temperature range.

For instance, gasket materials in the cooling system of an automobile engine may be subjected to temperatures ranging from -25°C. to 100°C. or more. While it is important that such materials do not catastrophically fail at the lower end of the service temperature range, such materials are generally selected to exhibit their peak mechanical properties over the preferred temperature range of the coolant in a fully-warmed engine. Thus, the gasket is designed such that its peak properties are exhibited over a predetermined service temperature range that encompasses the preferred temperature range of the coolant in a fully warmed engine.

Concurrently, a door gasket for a deep freezer is generally subjected to a fairly large, but constant, temperature gradient, ranging from -25°C. to room temperature. In such a case the material must retain its tough properties over the entire temperature gradient and the predetermined service temperature range may go from -25°C. to room temperature.

The alloys of the present invention are considered useable for predetermined service temperature ranges which fall between -120°C. and 250°C. Thus, our invention is directed to alloys that exhibit certain requisite mechanical properties over a predetermined service temperature range, the lower limit of which is not below -120°C. and the upper limit of which is not above 250°C. It will be understood that the predetermined service temperature range need not encompass the entire range of -120°C. to 250°C.

In the present invention, silicone resin/fluid alloy compositions that exhibit high strength and toughness over a predetermined service temperature range are prepared by blending:

(A) an organosilicone resin of the empirical formula

$$[R_3SiO_{1/2}]_a[R_2SiO_{2/2}]_b[RSiO_{3/2}]_c[SiO_{4/2}]_d$$

wherein: a, b, c and d are positive numerical values with the provisos that $a + b + c + d = 1$, $1/2(b + c + d) \leq a \leq (b + c + d)$ and $0 \leq (b + c)/d \leq 0.2$; R is a monovalent radical independently selected from the group consisting of hydrogen atom or hydroxyl, alkyl, alkenyl, alkoxy, oximo, aryl, epoxide, carboxyl, ether, amide and alkyl amino radicals, which R groups may be the same or different, with the proviso that at least sixty mole percent of said R radicals are methyl; the organosilicone resin (A) has a number average molecular weight (Mn) between 2,000 and 7,000; and

(B) a predominantly linear silicone fluid having the empirical formula

$$[R'_3SiO_{1/2}]_x[R'_2SiO_{2/2}]_y[R'SiO_{3/2}]_z$$

wherein: x, y and z are positive numerical values with the provisos that $x + y + z = 1$ and $y/(x + y + z) \geq 0.9$; and R' is a monovalent radical independently selected from the group consisting of hydrogen atom or hydroxyl, alkyl, alkenyl, alkoxy, oximo, aryl, epoxide, carboxyl, ether, amide and alkyl amino radicals, which R' groups may be the same or different, with the proviso that at least ninety mole percent of said R' radicals are methyl;

said organosilicon resin (A) being present in an amount of 45 to 80 parts, by weight, and said predominantly linear silicone fluid (B) being present in an amount of 55 to 20 parts by weight, per 100 parts, by weight of the combined total of (A) and (B);

(C) a predetermined quantity of a cross-linker having at least three functional groups per molecule;

a predetermined number average of said R radicals per molecule (rRn) of said organosilicone resin (A) being reactive with said functional groups of said cross-linker (C) so as to render said organosilicone resin (A) copolymerizable with said crosslinker (C);

a predetermined number average of said R' radicals per molecule (rR'n) of said predominantly linear silicone fluid (B) being reactive with the functional groups of the cross-linker (C) so as to render the predominantly linear silicone fluid (B) copolymerizable with the cross-linker (C); and

the respective predetermined number averages rRn and rR'n and the predetermined quantity of the cross-linker being selected such that: the silicone polymer alloy composition, when cross-linked and free of an inorganic filler, exhibits the following mechanical properties over the predetermined service temperature range: an ultimate tensile strength greater than or equal to 2.75 x $10^6$ Pa; a shear loss modulus G" greater than or equal to $10^6$ Newtons per $m^2$; and a loss tangent (tan $\delta$) greater than or equal to 0.10.

In the preferred embodiment of our invention, the amount of silicone resin (A) is limited to between 50 - 65 parts and the amount of silicone fluid (B) is limited to between 50 and 35 parts, per 100 parts of the combined weights of (A) and (B). As a general rule, it is noted that the best mechanical properties at ambient temperatures are obtained when these ranges are maintained.

The Mn of the silicone resin used in the composition of this invention may vary from 2,000 to 7,000. At Mn below 2,000, the aforementioned properties of alloys produced therefrom are not substantially enhanced. When resins of Mn above 7,000 are used, they may become incompatible with the silicone fluid and again, the desirable physical properties of the alloy composition are not substantially enhanced.

In the preferred embodiment, the Mn of the resin is limited to between 3,500 and 5,500. It has been generally found that resins within this range are very compatible with the predominantly linear silicone fluids and the desired physical properties are best obtained.

Component (B), the predominantly linear silicone fluid, is described as having the empirical formula

$$[R'_3SiO_{1/2}]_x[R'_2SiO_{2/2}]_y[R'SiO_{3/2}]_z$$

wherein: x, y and z are positive numerical values with the provisos that $x + y + z = 1$ and $y/(x + y + z) \geq 0.9$ and wherein at least 90 mole percent of the R' radicals are methyl. We have surprisingly found that if the ratio of $y/(x + y + z)$ is less than 0.9, then the resulting alloy exhibits brittle, rather than tough behavior. It is believed that this phenomenon is due to the formation of too high a cross-link density in the alloy.

We have also determined that if less than ninety mole percent of the R' groups are methyl, then the fluid becomes incompatible with the resin, resulting in an alloy composition that does not exhibit the requisite physical properties.

It should be noted that the resin of component (A) is described as having a predetermined number average of said R radicals per molecule (rRn), which are reactive with the functional groups of the cross-linker (C), so as to render the resin (A) copolymerizable with the cross-linker (C). Likewise, component (C), the fluid, is selected such that it includes a predetermined number average of R' radicals per molecule (rR'n), which are reactive with the functional groups of the cross-linker (C) so as to render the fluid (B) copolymerizable with the cross-linker (C). It should be further noted that rRn, rR'n and the quantity of cross-linker (C) are selected such that the desired physical properties are obtained. Such selection merely fixes the degree of cross-linking that takes place in the silicone resin/fluid alloy of this invention. Too much cross-linking results in brittle behavior. Too little cross-linking results in insufficient values for ultimate tensile strength and shear loss modulus.

While the above-described selections are used to control the degree of cross-linking in the alloys of our invention, another method also exists. The value rR'n of Component (A) and the number average of $[R'_2SiO_{2/2}]$ units between at least two R', which are reactive with the functional groups of the cross-linker (C), define a nonfunctional linear chain length for a given fluid (B).

In our preferred embodiment, the number average nonfunctional linear chain length is between 100 and 10,000. Even more preferred is to utilize silicone fluids (B) having an rR'n of at least 2 and to match the nonfunctional linear chain length thereof with the resin (B) value of rRn. For instance, when the resin (A) rRn value is between 1 and 2.5, silicone fluids (B) having a nonfunctional linear chain length of 100 to 400 are preferred. When the resin (A) rRn value is between 2.5 and 4, silicone fluids (B) having a nonfunctional linear chain length of 400 to 3,000 are preferred and so on. In this manner, the cross-link density of our silicone resin/fluid alloy composition of this invention may be controlled to yield the best possible values of ultimate tensile strength, shear loss modulus and loss tangent over a given predetermined service temperature range.

It will be understood that the cross-link density of the alloys of the invention is not determined by a direct measruement thereof. Rather, cross-link density is judged indirectly and in accordance with the criteria for toughness and high strength set forth herein, i.e. the values of ultimate tensile strength, shear loss modulus and loss tangent.

It will be further understood that the silicone resin/fluid alloy compositions of the present invention may include an inorganic filler such as silica, so long as the cross-linked alloy, without the inorganic filler, exhibits the requisite mechanical properties. Indeed, it would be expected that the inclusion of an inorganic filler would proportionately increase the toughness of the composition of the invention, but with an attendant loss of optical clarity.

Those skilled in the art will recognize that the silicone resin/fluid compositions of the invention may optionally include a catalytic amount of a cross-linker activation catalyst (D) which promotes copolymerization between the silicone resin (A), the predominantly linear silicone fluid (B) and the cross-linker (C). Likewise, the alloy composition of the

invention may include a catalyst inhibitor, which inhibitor prevents the aforementioned copolymerization until its effect is neutralized by some means such as thermal degradation.

It is, therefore, an object of the present invention to provide silicone resin/fluid alloy compositions having improved toughness over a predetermined service temperature range as evidenced by the values of ultimate tensile strength, the shear loss modulus and loss tangent for the claimed compositions.

It is another object of the invention to provide a novel method of making tough, high strength silicone resin/fluid alloy compositions by: blending silicone resin and fluid within a limited range of weight ratios; limiting the number average molecular weights of the resin and fluid to predetermined ranges; cross-linking the silicone resin/fluid blend; and controlling the cross-link density of the silicone resin/fluid alloy.

Five different silicone resin/fluid alloy systems were investigated to determine the effects of the following parameters on the mechanical properties of the cured alloys: the ratio of resin to fluid; the number of reactive groups per resin molecule (rRn); the number average molecular weight of the resin (Mn); the number of reactive groups per fluid molecule (rR'n); and the number average non-functional chain length between functional R' groups in the fluid. Mechanical testing, which included measurements of ultimate tensile strength, tear strength, shear loss modulus (G") and loss tangent, [tan(δ)], was carried out on both moisture-and addition-cure silicone resin/fluid alloy systems.

MOISTURE-CURE ALLOY SYSTEM

Fifteen different moisture-cure silicone resin/fluid alloys were prepared, cured and mechanically tested.

**1. Preparation of Hydroxyl-Functional Organosilicon Resin (A)**

Several organosilicone resin compositions (A) having varying number averages (rRn) of reactive hydroxyl (-OH) R radicals per molecule were prepared by blending first and second resins. Those skilled in the art will recognize that a given number average of reactive groups (rRn) per resin molecule can be achieved by either: 1) blending resins having a greater and lesser value of rRn than that desired; or 2) end-capping residual hydroxy groups on a resin with functional and non-functional groups to such an extent that the desired rRn is obtained.

A first siloxane resin (Res1) was made by the method of US-A 2,676,182. The resin was prepared from the acid-catalyzed (HCl) hydrolysis/condensation of sodium silicate. The polymerization was terminated by end-capping through the addition of an isopropyl alcohol solution of trimethylchlorosilane and hexamethyldisiloxane. The HCl and isopropyl alcohol were washed from the end-capped polymer resin and the hexamethyldisiloxane was solvent-exchanged with xylene, yielding a final dispersion that was 74% solids, by weight. Res1 had the empirical formula:

$$[R_3SiO_{1/2}]_a[R_2SiO_{2/2}]_b[RSiO_{3/2}]_c[SiO_{4/2}]_d$$

wherein a was 0.43, b was 0, c was 0.08 and d was 0.49. The composition had a Mn of 4300, an rRn number average of five reactive R radicals per molecule in the form of hydroxyl radicals, the remaining R radicals being methyl. The hydroxyl radicals were contributed from the $[RSiO_{3/2}]$ units.

Values of rRn and Mn for Res1, and all resins subsequently described herein, were determined through the use of $^{29}Si$ nuclear magnetic resonance (NMR) and resin-calibrated gel permeation chromatography (GPC).

A second siloxane resin (Res2) had the same empirical formula, except that the value of a was 0.41, b was 0, c was 0 and d was 0.59. The Mn was 4800 and the composition had a number average (rRn) of 0 reactive R radicals per molecule, substantially all R groups being methyl. This second siloxane resin was also made by the method disclosed above except that the end product was treated with an excess of hexamethyldisilazane in the presence of trifluoroacetic acid to remove residual hydroxyl groups. The final dispersion had a solids content of 65% by weight.

Those skilled in the art will recognize that while the composition of Res2 is indicated as having a number average of 0 reactive R radicals associated with each resin molecule, the process of end-capping a resin with hexamethyldisiloxane terminates the polymerization of the resin molecule and leaves a number of residual, reactive hydroxyl radicals. Further end-capping with an excess of hexamethyldisilazane removes those residual reactive hydroxyl radicals. This does not imply, however, that all hydroxyl radicals have been removed from the resin molecules. Indeed, some residual hydroxyl groups always remain, but may be ignored as they are substantially nonreactive under most conditions. Accordingly, the number average designation of reactive R radicals rRn (and rR'n below) do not include such generally unreactive hydroxyl radicals.

The first and second siloxane resins, Res1 and Res2, were cold-blended to homogeneity in varying ratios such that Example Resins (A) 1-15 had values for a, b, c, d, Mn and rRn, as set forth in Table 1. Unless otherwise stated herein, all weights in Table 1, and those subsequently reported herein, are weights of solids content and do not include the weight of any solvent. Due to the error introduced by rounding fractional amounts, the sum of a, b, c and is not exactly equal to 1.00 in every instance.

Table 1

| Resin (A) Example No. | Res1 (g) | Res2 (g) | $\frac{\text{Res 1}}{\text{Res 2}}$ parts by wt. | a | b | c | d | rRn | Mn |
|---|---|---|---|---|---|---|---|---|---|
| 1 | 36 | 0 | 100/0 | 0.42 | 0 | 0.11 | 0.47 | 5 | 4300 |
| 2 | 50 | 0 | 100/0 | 0.42 | 0 | 0.11 | 0.47 | 5 | 4300 |
| 3 | 57 | 0 | 100/0 | 0.42 | 0 | 0.11 | 0.47 | 5 | 4300 |
| 4 | 64 | 0 | 100/0 | 0.42 | 0 | 0.11 | 0.47 | 5 | 4300 |
| 5 | 29 | 31 | 52/48 | 0.42 | 0 | 0.070 | 0.51 | 2.5 | 4550 |
| 6 | 25 | 40 | 42/58 | 0.41 | 0 | 0.060 | 0.52 | 2.1 | 4590 |
| 7 | 21 | 50 | 33/67 | 0.41 | 0 | 0.055 | 0.53 | 1.7 | 4635 |
| 8 | 17 | 60 | 25/75 | 0.41 | 0 | 0.050 | 0.54 | 1.25 | 4675 |
| 9 | 33 | 30 | 56/44 | 0.42 | 0 | 0.075 | 0.51 | 2.8 | 4520 |
| 10 | 28 | 40 | 45/54 | 0.41 | 0 | 0.065 | 0.51 | 2.25 | 4575 |
| 11 | 23 | 50 | 35/65 | 0.41 | 0 | 0.055 | 0.53 | 1.75 | 4625 |
| 12 | 36 | 30 | 58/42 | 0.42 | 0 | 0.075 | 0.51 | 2.9 | 4510 |
| 13 | 31 | 40 | 48/52 | 0.41 | 0 | 0.070 | 0.51 | 2.5 | 4540 |
| 14 | 26 | 50 | 38/62 | 0.41 | 0 | 0.060 | 0.51 | 1.9 | 4610 |
| 15 | 22 | 60 | 30/70 | 0.41 | 0 | 0.050 | 0.53 | 1.5 | 4650 |

**2. Preparation of Hydroxyl-Functional Predominantly Linear Silicone Fluid (B)**

This silicone fluid (B) had the empirical formula:

$$[R'_3SiO_{1/2}]_x[R'_2SiO_{2/2}]_y[R'SiO_{3/2}]_z$$

wherein x was 0.007, y was 0.993 and z was 0. The composition had an Mn of 22,000, rR'n was 2 (one hydroxyl group located at each molecular terminal, all other R' groups being methyl) and a nonfunctional linear chain length (i.e., the degree of polymerization between the functional hydroxyl groups) of 300.

This predominantly linear silicone fluid is described as a dimethylsilanol-terminated polydimethylsiloxane having a viscosity of 4,000 centistokes ($mm^2/s$). It was prepared by the condensation/hydrolysis reaction of silanol-terminated oligomers in the presence of a potassium hydroxide catalyst. The catalyst was inactivated when the desired viscosity was reached.

**3. Formulating Moisture-Cure Silicone Resin/Fluid Alloys**

Simultaneous with the cold-blending preparation of Example Resins (A) 1-15, varying amounts of the above-described dimethylsilanol-terminated polydimethylsiloxane fluid were also added to the blend. Minor amounts of additional xylene were added to control the viscosity of the blend, as necessary. Blending was carried out by hand-mixing with a spatula.

Thereafter, stoichiometric amounts of a methyltrisoximosilane cross-linker (available as OS-100™ from Allied Signal, Inc. of Morristown, NJ) were added to the blends. The cross-linker was of the general formula:

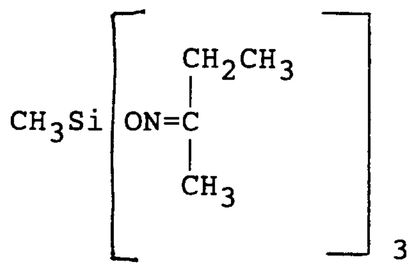

As used above, the term "stoichiometric amount" means that a one-to-one molar ratio between the methyltrisoximinosilane cross-linker and the reactive silanol groups in the resin/fluid blend was achieved. Those skilled in the art will appreciate that each molecule of the cross-linker includes at least one labile oximo group which will react with and cap the fluid and resin at their respective reactive hydroxyl sites, without catalysis. The blend was gently mixed for 3 hours to ensure that a homogeneous, capped composition was obtained.

Thereafter, the blends were vacuum degassed to 10 mm Hg (1.3 kPa) and blanketed with nitrogen to remove residual moisture and then one-half weight percent, maximum, of tetrabutyltitinate was added as a moisture-cure catalyst. The specific catalyst used was purchased from E. I. DuPont De Nemours & Company of Wilmington, Delaware as Tyzor® TBT. The catalyst, although not necessary, was used to ensure that cross-linking would be carried out to the fullest extent possible over the shortest period of time.

The blends so-produced from the Example resins are designated as Alloy Example Nos. 1-15 in Table 2.

**4. Preparation of Moisture-Cured Test Specimens**

Rectangular test specimens were cast in 7.62 x 20.3 x 0.1524 cm (3 x 8 x 0.06 inch) open top molds. The molds were fully filled with the Example Alloys, which alloys were then cured in situ, under ambient conditions, for a minimum of two days. Thereafter, the cast slabs were removed from the molds and stored at ambient conditions for at least an additional five days. Finally, the test specimens were placed in a forced air oven at 50°C., for one hour. The resulting test specimens were 0.1016 cm (0.040 inch) thick, reflecting the loss of xylene solvent.

The chemistry of oximo moisture-cure systems is well-known in the art. In the presence of moisture from a source such as air, the oximo groups are lost to the cross-linker and silanol groups are formed at that site. The silanol groups subsequently condense, thus completing the copolymerization of the cross-linker and the silicone resin or fluid. A catalyst may be used to accelerate the process.

**5. Mechanical Testing**

The ultimate tensile strength, Die B tear properties, shear loss modulus and loss tangent of Example Alloys 1 - 15 were measured. Unless otherwise specifically mentioned, all mechanical testing was carried out at room temperature.

For measuring ultimate tensile strength, dog-bone specimen bars 0.4064 cm (0.16 inch) wide, with a 40 mm gauge length, were die-cut from the cured slabs and the actual thickness of the slabs was measured. The tensile properties of each Alloy Example were tested at a cross-head speed of 5.08 cm per minute (2 inches per minute) in accordance with ASTM 0412. The value reported in Table 2 for each Alloy Example is the numerical average of the ultimate tensile strength of three tensile specimens.

Die B tear strength of each of the Example Alloys was performed by ASTM D642, at a crosshead speed of 500 mm per minute. The value reported in Table 2 is the numerical average of two Die B tests for each Example Alloy.

Those skilled in the art of the mechanics of viscoelastic materials will recognize that the physical properties of shear loss modulus and loss tangent are related. The loss tangent is an index of the mechanical energy loss sustained in a given material undergoing deformation. Mechanical energy loss is defined as that mechanical energy which is not elastically recoverable and which is most often converted to heat. Thus, the loss tangent is the ratio of the shear loss modulus, (G"), to the shear elastic modulus (G').

To measure the shear loss modulus and loss tangent of Alloys 1-15, rectangular test specimens of 5.08 x 0.635 cm (2 x .25 inch) were stamped from the molded slabs. A dynamic mechanical thermal analyzer, model no. RDA-2 having a rectangular torsion tool geometry, was utilized (available from Rheometrics, Inc. of Piscataway NJ.) Frequency sweeps between 0.1 radian/second and 100 radians/sec were carried out at room temperature and at strains which insured linear viscoelastic behavior throughout. The values reported in Table 2 correspond to a frequency of 1 radian per second.

Table 2

| Alloy Example No. | Resin (A) Example No. | Fluid (B) (g) | MTO X-Linker (g) | Resin/Fluid parts by wt. | Tensile (Pa) | Tear (N/m) | G" Pa | tan(δ) |
|---|---|---|---|---|---|---|---|---|
| 1 | 1 | 75.0 | 14.4 | 25/75 | 9.58e05 | 2,800 | 8.0e04 | 0.01 |
| 2 | 2 | 65.0 | 18.9 | 35/65 | 1.90e06 | 3,670 | 2.7e05 | 0.03 |
| 3 | 3 | 60.0 | 23.6 | 40/60 | 2.05e06 | 4,720 | 5.2e05 | 0.05 |
| 4 | 4 | 55.0 | 23.7 | 45/55 | 1.64e06 | 6,640 | 2.0e06 | 0.29 |
| 5 | 5 | 38.4 | 11.0 | 50/50 | 3.01e06 | 5,770 | 2.3e06 | 0.36 |
| 6 | 6 | 32.9 | 9.4 | 56/44 | 3.32e06 | 6,990 | 7.4e06 | 0.42 |
| 7 | 7 | 27.4 | 7.9 | 62/38 | 3.99e06 | 10,700 | 2.1e07 | 0.34 |
| 8 | 8 | 21.9 | 6.3 | 68/32 | 3.42e06 | 12,060 | 5.4e07 | 0.22 |
| 9 | 9 | 33.8 | 13.3 | 55/45 | 2.51e06 | 6,990 | 2.8e06 | 0.23 |
| 10 | 10 | 29.0 | 11.4 | 60/40 | 3.51e06 | 11,540 | 2.1e07 | 0.37 |
| 11 | 11 | 24.2 | 9.5 | 65/35 | 4.56e06 | 16,430 | 5.2e07 | 0.20 |
| 12 | 12 | 31.2 | 13.4 | 58/42 | 3.55e06 | 13,280 | 2.8e07 | 0.23 |
| 13 | 13 | 26.7 | 11.5 | 63/37 | 5.18e06 | 18,530 | 4.5e07 | 0.20 |
| 14 | 14 | 22.3 | 9.6 | 68/32 | 3.75e06 | 32,510 | 7.7e07 | 0.11 |
| 15 | 15 | 17.8 | 7.7 | 74/26 | Brittle | Brittle | Brittle | Brittle |

**ADDITION-CURE ALLOY SYSTEMS**

**1. Preparation of Organosilicone Resin (A)**

Two different vinyl-functional silicone resins, Res3 and Res4, were prepared.
Res3 had the empirical formula:

$$[R_3SiO_{1/2}]_{(a)}[R_2SiO_{2/2}]_b[RSiO_{3/2}]_c[SiO_{4/2}]_d$$

wherein (a) was 0.41, b was 0, c was 0 and d was 0.59. In Res3, the component $[R_3SiO_{1/2}]_{(a)}$ was comprised of both trimethylsiloxy and dimethylvinylsiloxy units, which are respectively designated (a1) and (a2), such that (a1) + (a2) = 0.41 . Thus, in Res3, (a1) was 0.345 and (a2) was 0.065.

Res3 was also prepared from the acid-catalyzed (HCl) hydrolysis/condensation of sodium silicate. The polymerization was terminated by end-capping through the addition of an isopropyl alcohol solution of trimethylchlorosilane and hexamethyldisiloxane. The HCl and isopropyl alcohol were washed from the end-capped polymer resin and the hexamethyldisiloxane was solvent exchanged with xylene. The product was then treated with an excess of dimethylvinylchlorosilane and heated to reflux for one hour. The dimethylvinylchlorosilane reacted with residual hydroxyl radicals to yield an rRn of 4.75 vinyl groups per resin molecule. The resin molecules had an Mn of 5070 and were dispersed in xylene at a concentration of 75% solids, by weight.

Res4 had the same general formula as Res3, expect that it included a substantially higher number average (rRn) of reactive vinyl radicals per molecule, i.e., (a1) was 0.31 and (a2) was 0.10. Res4 was also prepared by the acid hydrolysis/condensation of sodium silicate except that the end-capping step utilized an isopropyl solution of hexamethyldisiloxane and vinyldimethylchlorosilane. This produced a vinyl- and hydroxyl-containing resin. Thereafter, the resin was separated from the aqueous phases and again treated with an excess of vinyldimethylchlorosilane and heated to reflux for one hour. This produced a resin molecule having a very low concentration of hydroxyl groups and an rRn of 6.69 vinyl groups per molecule. The resin had an Mn of 4450 and was dispersed in xylene to 72% solids, by weight.

As shown in Table 3, Res3 was blended with Res2 in varying proportions, to yield Resin (A) Example Nos. 16 - 19,

respectively having a vinyl-functional rRn value of 1 - 4. Res3 was blended with Res4 to yield Resin (A) Example Nos. 20 and 21, which had vinyl-functional rRn values of 5 and 6, respectively.

TABLE 3

| Resin (A) Example No. | Res2 (g) | Res3 (g) | Res4 (g) | a1 | a2 | b | c | d | rRn | Mn |
|---|---|---|---|---|---|---|---|---|---|---|
| 16 | 22.92 | 5.09 | 0 | 0.4 | 0.015 | 0 | 0 | 0.59 | 1 | 4855 |
| 17 | 16.81 | 10.17 | 0 | 0.385 | 0.03 | 0 | 0 | 0.59 | 2 | 4915 |
| 18 | 10.69 | 15.26 | 0 | 0.37 | 0.04 | 0 | 0 | 0.59 | 3 | 4970 |
| 19 | 4.58 | 20.35 | 0 | 0.36 | 0.055 | 0 | 0 | 0.59 | 4 | 5025 |
| 20 | 0 | 23.44 | 0.76 | 0.35 | 0.065 | 0 | 0 | 0.59 | 5 | 5050 |
| 21 | 0 | 8.59 | 16.22 | 0.325 | 0.085 | 0 | 0 | 0.59 | 6 | 4670 |

### 2. Preparation of Vinyl-Functional Predominantly Linear Silicone Fluids (B)

Four different vinyl-functional predominantly linear silicone fluids (B) (designated V-Fluid1, V-Fluid2, V-Fluid3 and V-Fluid4) were prepared.

V-Fluid1 was a vinyldimethylsiloxy-terminated polydimethylsiloxane having a number average degree of polymerization 225. Accordingly, each molecule had a number average (rR'n) of two vinyl radicals per molecule and a number average nonfunctional linear chain length of 223 dimethylsiloxy units between the functional groups. V-Fluid1 had a viscosity of 2,000 centistokes ($mm^2/s$) and an Mn of 16,800.

V-Fluid2 was a vinyldimethylsiloxy-terminated polydimethylsiloxane having a number average degree of polymerization 500. Accordingly, each molecule had a number average (rR'n) of two vinyl radicals per molecule and a number average nonfunctional linear chain length of 498 dimethylsiloxy units between the functional groups. V-Fluid2 had a viscosity of 10,000 centistokes ($mm^2/s$) and an Mn of 37,200.

V-Fluid3 was a vinyldimethylsiloxy-terminated polydimethylsiloxane having a number average degree of polymerization 900. Accordingly, each molecule had a number average (rR'n) of two vinyl radicals per molecule and a number average nonfunctional linear chain length of 898 dimethylsiloxy units between the functional groups. V-Fluid3 had an Mn of 66,800 and a viscosity of 60,000 centistokes ($mm^2/s$).

V-Fluid4 was a vinyldimethylsiloxy-terminated polydimethylsiloxane having a number average degree of polymerization 5,000 and a number average (rR'n) of three vinyl radicals per molecule, a vinyl group being substituted for one of the methyl groups in the polydimethylsiloxane chain. Thus, each molecule had number average nonfunctional linear chain length of 2497 dimethylsiloxy units between the functional groups. V-Fluid4 was dispersed in xylene at a concentration of 40 percent, by weight, and had an Mn of 370,000 and the consistency of a gum.

V-Fluid1 - V-Fluid3, simple vinyldimethylsiloxy-terminated PDMS chains, were prepared by a known process which is generally referred to as the ring-opening polymerization of dimethylcyclosiloxanes. Such ring-opening polymerization is carried out in the presence of a strong acid or base catalyst. To produce the vinyl-functional fluids utilized in the invention, the ring opening polymerization was carried out in the presence of divinyltetramethyldisiloxane, which acts as a chain-terminating agent. The acid or base catalyst is inactivated upon reaching equilibrium conditions. Chain length is controlled by the ratio of chain-terminating to chain-building (dimethylcyclosiloxane) units.

V-Fluid4 was also prepared by the ring-opening polymerization process described above, except that a proportionate amount of tetramethyltetravinylcyclosiloxane was added to the dimethylcyclosiloxane starting material. This resulted in a vinyldimethylsiloxy-terminated polydimethylsiloxane structure, except that each PDMS chain had, on average, a substitution of one vinyl group for one methyl.

Predominantly linear silicone fluids of the V-Fluid1 - V-Fluid4 type described above are commercially available from Huels of America, Inc., Bristol PA.

### 3. Formulating the Addition-Cure Silicone Resin/Fluid Alloys

Each of Resin Example Nos. 16 - 21 was cold-blended with each of V-Fluid1 - V-Fluid3 in a weight ratio of 60 parts resin to 40 parts fluid, to obtain an Example Alloy formulation that was typically 85% solids, by weight, dispersed in xylene. Example Alloy Nos. 34 - 39, which utilized V-Fluid4 in the same resin/fluid weight ratio, were prepared in an

identical manner but had 50% solids, by weight, dispersed in xylene. Thereafter, an addition-cure cross-linker of the formula:

$$CH_3Si(OSi[CH_3]_2)_{12}(OSi[CH_3]H)_{28}OSiCH_3$$

was added in such an amount that the molar ratio of SiH groups to vinyl groups was 1.5:1. That is to say, a stoichiometric excess of cross-linker was added. 0.2 g of diethylfumarate, a catalyst inhibitor, was added per 10 g of the combined weights of Example Resin and V-Fluid. Finally, 0.02 g of a platinum catalyst (1.5 wt.% chloroplatinic acid dispersed in short-chained siloxanes) was added per 10 g of the combined weights of Example Resin and V-Fluid and blended in by mixing with a spatula, resulting in the Example Alloys 16 - 39, as set forth in Tables 4 - 7.

**4. Preparation of Addition-Cured Example Alloy Test Specimens**

Alloy Example Nos. 16 - 39 were cast in slabs by pouring into round, open top molds, 6 inches (15.24 cm) in diameter. The mold was filled to a depth of 0.75 inch (1.91 cm) and vacuum-degassed overnight at 10 mm Hg (1.3 kPa), at room temperature. The vacuum degassing resulted in the loss of the organic solvent dispersant. Curing of the slab was carried out by heating the samples to 130°C., for one hour, in a forced air oven. The cured Example Alloy test specimens had a thickness slightly in excess of 0.05 inch (12.7 mm).

**5. Mechanical Testing**

Mechanical testing was carried out in a manner identical to that previously described in connection with the Moisture-Cure Alloy System. The values of ultimate tensile strength, Die B tear strength, shear loss modulus and loss tangent are reported in Tables 4 - 7 for Example Alloys 16 - 39. Again, unless otherwise indicated, all testing was carried out at room temperature.

TABLE 4

| V-Fluid1 | | | | | | |
|---|---|---|---|---|---|---|
| Alloy Example No. | Resin (A) Example No. | X-Linker (g) | Tensile (Pa) | Tear (N/m) | G" Pa | tan(δ) |
| 16 | 16 | 0.73 | 4.24e06 | 7,866 | 3.2e06 | 0.47 |
| 17 | 17 | 1.24 | 5.50e06 | 7,516 | 5.5e06 | 0.28 |
| 18 | 18 | 1.76 | 2.82e06 | 6,817 | 5.8e06 | 0.16 |
| 19 | 19 | 2.28 | 2.64e06 | 2,622 | 5.1e06 | 0.10 |
| 20 | 20 | 2.71 | 2.16e06 | 874 | 4.1e06 | 0.08 |
| 21 | 21 | 3.61 | 6.89e05 | 1,048 | 3.1e06 | 0.08 |

TABLE 5

| V-Fluid2 | | | | | | |
|---|---|---|---|---|---|---|
| Alloy Example No. | Resin (A) Example No. | X-Linker (g) | Tensile (Pa) | Tear (N/m) | G" (Pa) | tan(δ) |
| 22 | 16 | 0.61 | 5.34e06 | 7,516 | 2.4e06 | 0.53 |
| 23 | 17 | 1.12 | 5.41e06 | 10,313 | 3.9e06 | 0.33 |
| 24 | 18 | 1.64 | 8.94e06 | 12,760 | 4.7e06 | 0.17 |
| 25 | 19 | 2.16 | 2.65e06 | 5,768 | 4.2e06 | 0.10 |
| 26 | 20 | 2.59 | 3.19e06 | 4,195 | 4.2e06 | 0.08 |
| 27 | 21 | 3.49 | 1.63e06 | 3,321 | 3.9e06 | 0.07 |

TABLE 6

| V-Fluid3 | | | | | | |
|---|---|---|---|---|---|---|
| Alloy Example No. | Resin (A) Example No. | X-Linker (g) | Tensile (Pa) | Tear (N/m) | G" (Pa) | tan (δ) |
| 28 | 16 | 0.57 | 6.26e06 | 9,789 | 3.0e06 | 0.57 |
| 29 | 17 | 1.08 | 5.80e06 | 14,334 | 5.6e06 | 0.3 |
| 30 | 18 | 1.6 | 6.21e06 | 18,354 | 5.8e06 | 0.18 |
| 31 | 19 | 2.12 | 7.86e06 | 9,789 | 5.6e06 | 0.11 |
| 32 | 20 | 2.55 | 3.40e06 | 6,468 | 5.2e06 | 0.09 |
| 33 | 21 | 3.45 | 3.36e06 | 8,390 | 4.2e06 | 0.06 |

TABLE 7

| V-Fluid4 | | | | | | |
|---|---|---|---|---|---|---|
| Alloy Example No. | Resin (A) Example No. | X-Linker (g) | Tensile (Pa) | Tear (N/m) | G" (Pa) | tan(δ) |
| 34 | 16 | 0.53 | 5.78e06 | 14,334 | 1.8e06 | 0.56 |
| 35 | 17 | 1.04 | 8.17e06 | 16,956 | 2.4e06 | 0.26 |
| 36 | 18 | 1.56 | 7.89e06 | 28,492 | 3.6e06 | 0.18 |
| 37 | 19 | 2.08 | 7.98e06 | 15,557 | 2.1e06 | 0.13 |
| 38 | 20 | 2.51 | 6.89e06 | 13,110 | 2.4e06 | 0.10 |
| 39 | 21 | 3.41 | 5.02e06 | 9,789 | 2.2e06 | 0.07 |

## DISCUSSION OF RESULTS

## MOISTURE-CURE SYSTEM

Referring now particularly to Table 2, it can be seen that Alloy Example Nos. 1 - 4 fail to meet the criteria of room temperature high strength and toughness for the claimed alloys of this invention. Example Alloys 1 - 3 also fail to meet the minimum requirements for room temperature ultimate tensile strength ≥ 2.75 x $10^6$ Pa, G" ≥ $10^6$ Pa and tan(δ) ≥ 0.10 of compositions within the scope of the invention.

It should be noted, however, that Example Alloys 1 - 4 included increasingly higher ratios of resin/fluid and that only Alloy 4 met the ratio limitation of the present invention, i.e., 45 parts resin and 55 parts fluid. While these alloys show generally higher values for G" and tan(δ) as the alloys become richer in resin, Alloy 4 still fails to show the requisite ultimate tensile strength.

Referring now to both Tables 1 and 2, it can be seen that Alloy Example Nos. 1 - 4 were all made with a resin having an rRn of 5 reactive hydroxyl radicals per molecule (Resin Example Nos. 1 - 4).

The above Resin and Alloy Example Nos. should be compared with Resin Example No. 5 and Alloy Example No. 5 produced therefrom. Resin Example No. 5 had an rRn of 2.5 hydroxyl radicals per resin molecule. Accordingly, the amount of cross-linker used to cross-link the alloy was substantially less than that used for Alloy Example Nos. 1 - 4.

Furthermore, the resin/fluid ratio of Alloy Example No. 5 was 50/50, well within the scope of the claimed composition of the present invention. The result is that Alloy Example No. 5 met each of the limitations for ultimate tensile strength, G" and tan(δ) of our inventive composition. Alloy Example No. 5 is clearly a tough, high strength silicone resin/fluid alloy at room temperature.

The above comparison shows that not only is the ratio of resin/fluid an important factor in producing tough, high strength alloys, but control of the cross-link density of the alloy is necessary to produce a composition having the requisite mechanical properties.

Control of the cross-link density may be carried out via two different process steps: 1) limiting of the rRn of the resin and the rR'n of the fluid; or 2) limiting the amount of the cross-linker and the number of functional groups thereon so that less than a stoichiometric amount is used.

Referring to Tables 1 and 2 and Resin and Alloy Example Nos. 6 - 14, it is seen that maintaining the ratio of resin/fluid between the stipulated limits of 45/55 and 80/20 and controlling the cross-link density (in this instance via limiting the values of rRn,) resulted in a series of silicone resin/fluid alloys that exhibited excellent mechanical properties at room temperature. All these alloys (except Alloy Example No. 9) are considered to be within the scope of the composition of the present invention.

Example Alloy No. 15 had a ratio of resin/fluid of 74/26. This ratio of resin/fluid is near the upper limit of the ratio defined by the present invention, i.e., 80/20. Measurement of the room temperature mechanical properties of this alloy were not possible because of its extremely brittle behavior. It would be expected, however, that Example Alloy No. 15 would exhibit the requisite room temperature mechanical properties if the number average molecular weight of the resin was reduced.

It should be noted that the Die B tear strength of each of the Alloy Examples was measured. While Die B tear strength is often used as an indication of toughness, it is proposed that the combination of the properties of ultimate tensile strength, shear loss modulus (G") and loss tangent tan(δ) more accurately depicts the relative strength and toughness of viscoelastic materials. While the thin sections employed in measuring Die B tear may sometimes lead to anomalous results, a fairly good correlation exists between the mechanical properties used to define the present invention and the results of Die B tear testing.

A quick study of the results set forth in Table 2 reveals some trends associated with the mechanical properties of silicone resin/fluid alloys.

For instance, alloys that are too low in resin content, generally exhibit inferior mechanical properties. Furthermore, utilizing a resin having a large number average of reactive groups per resin molecule, cannot compensate for too low a resin content, i.e., a resin content less than 45 parts, per 100 parts of the combined weights of the resin and fluid. This phenomenon is clearly illustrated by the comparison of mechanical properties of Alloy Example Nos. 1 - 4 with those of Alloy Example Nos. 5 - 8.

A comparison of Alloy Example Nos. 9 and 12 shows that a slight increase in the amount of resin (from 55 parts to 58 parts) can result in a dramatic increase in ultimate tensile strength, Die B tear strength and shear loss modulus, without drastically affecting the values of the loss tangent.

A comparison of Alloy Example Nos. 12 - 15 shows that an increase in resin content generally increases the ultimate tensile strength and Die B tear strength of the alloy system, but only to a point. As resin content becomes too high, the alloys loose tensile and tear strength, behaving in a more brittle manner. This appears true even though each of the successive alloys in this series utilized less and less cross-linker, as the value of rRn decreased as resin content increased.

## ADDITION-CURE ALLOY SYSTEMS

Referring to Tables 3 and 4, it is seen that in a system utilizing 40 parts V-Fluid1 and 60 parts resin, as the rRn of the resin was increased from 1 to 6 (Resin Example Nos. 16 - 21, respectively), the room temperature mechanical properties of the alloys produced therefrom (Alloy Example Nos. 16 - 21) generally declined. These results once again support the proposition that an optimum cross-link density exists for a given silicone resin/fluid alloy system. The best room temperature physical properties were exhibited when rRn of the resin was either 1 or 2.

Table 5 discloses another series of alloys (Alloy Example Nos. 22 - 27) which were virtually identical in make-up to Alloy Example Nos. 16 - 21, differing only in the predominantly linear silicone fluid (B) used to formulate the same (V-Fluid2 as opposed to V-Fluid1.) It should be noted V-Fluid1 and V-Fluid2 each had a value of rR'n of two, differing only in their nonfunctional linear chain lengths (i.e. 223 and 498 dimethylsiloxy units, respectively.) In each of the two alloy systems, a stoichiometric excess of cross-linker was used. Because V-Fluid2 has a greater nonfunctional linear chain length than V-Fluid1, Alloy Example No. 22 necessarily has a lower cross-link density than Alloy Example No. 16. Likewise, Alloy Example Nos. 23 - 27 have a lower cross-link density than corresponding Alloy Example Nos. 17 - 21, respectively. Accordingly, in Alloy Example Nos. 22 - 27, the optimum cross-link density was not reached until rRn reached 3 (in Alloy Example No. 24.) Thus, the value of rRn can also be used to control cross-link density to achieve optimum mechanical properties in the alloys of the invention.

Table 6 further illustrates the same proposition. Alloy Example Nos. 30 and 31 showed peak mechanical properties for an alloy system utilizing the same resins but with a predominantly linear silicone fluid (A) again having a value of rR'n of two, but a number average nonfunctional linear chain length of 898 dimethylsiloxy units. Alloy Example Nos. 30 and 31 had values of rRn of 3 and 4, respectively. When compared to the results of Tables 4 and 5, it is clear that the optimum cross-link density was achieved by increasing the number of reactive R sites on the resin molecules as the non-functional linear chain length of the predominantly linear fluid (B) was increased.

Finally, reference is made to Table 7. The Alloy Examples disclosed therein (Nos. 34 - 39) utilized the same resin as Alloy Example Nos. 16-21, but combined with a predominantly linear fluid (B) that had an rR'n of 3. The number average nonfunctional linear chain length between the reactive vinyl sites was 2497 dimethylsiloxy units. In this alloy system, the optimum cross-link density appears to have been achieved in Alloy Example Nos. 35 - 37, wherein the rRn of the resin varied between 2 and 4, inclusive.

**VARYING THE PREDETERMINED SERVICE TEMPERATURE RANGE**

Two different alloys were investigated to determine temperature impact on the mechanical properties of ultimate tensile strength, shear loss modulus and loss tangent.

The first alloy (Alloy Example No. 40) comprised Resin Example No. 17 (See Table 3) and V-Fluid3 combined in a ratio of 70 parts resin/30 parts fluid. Cross-linker, catalyst and inhibitor were added and test specimens prepared, all as previously described in connection with the addition-cure alloy systems. Thereafter, ultimate tensile strength, elongation at breaking, G" and tan (δ) were also measured as previously described but carried out at room temperature and 125°C. The results are:

| | Room Temp. | 125°C. |
|---|---|---|
| Tensile Strength (Pa) | 3.55e06 | 4.65e06 |
| elongation (%) | 270 | 210 |
| G" (Pa) | 8.6e06 | 2.2e06 |
| tan (δ) | 0.15 | 0.44 |

A comparison of the mechanical properties of Alloy Example No. 40 at room temperature and 125°C., clearly shows that it is well-suited for use over a predetermined service temperature range that encompasses room temperature and 125°C. Indeed, the tensile strength and loss tangent for the alloy are considerably higher at the higher service temperature, without showing substantial decrease in values for elongation or shear loss modulus. Thus, the alloy appears to be somewhat "tougher" at the elevated temperature. This alloy meets all the formulary and mechanical criteria for an alloy within the scope of the present invention.

The next alloy (Alloy Example No. 41) comprised Resin Example No. 19 combined with a predominantly linear silicone fluid described as vinyldimethylsiloxy-terminated polydimethylsiloxane which had a number average nonfunctional linear chain length of 8998 dimethyl siloxy units between the functional vinyl groups. The ratio of the resin/fluid was 45/55 parts, by weight. Again, cross-linker and inhibitor were added and test specimens prepared as previously described in connection with the addition-cure alloys. Thereafter, ultimate tensile strength, elongation at breaking, G" and tan (δ) were also measured as previously described but carried out at room temperature and -45°C. The results are:

| | Room Temp. | -45°C. |
|---|---|---|
| Tensile Strength (Pa) | 7.00e06 | 9.62e06 |
| elongation (%) | 1030 | 800 |
| G" (Pa) | 5.8e05 | 6.2e06 |
| tan (δ) | 0.14 | 0.19 |

A comparison of the mechanical properties of Alloy Example No. 41 at room temperature and -45°C. clearly shows that it is well-suited for use at a predetermined service temperature range that encompasses -45°C. The alloy exhibits exceptionally good ultimate tensile strength, tan (δ) and elongation at both temperatures. However, the alloy exhibits a value for shear loss modulus at room temperature that would make it undesirable for applications that require toughness at that temperature. Nonetheless, one would not expect catastrophic failure of this alloy if it were periodically subjected to room temperature under conditions that did not require exceptional toughness. This alloy therefore meets all

the formulary and mechanical criteria for inclusion within the scope of the present invention.

CLARITY MEASUREMENTS

In accordance with the invention, Alloy Example No. 42 was prepared by blending 4.68 g of Res2, 18.72 g of Res3 and 21.6 g of V-Fluid3 in the manner previously described. 2.21 g of the aforementioned silicon-bonded hydrogen-functional addition-cure cross-linker, 0.01 g of an inhibitor (1-ehtynyl-1-cyclohexanol, "etch") and 0.05 g of a platinum catalyst (1.5 wt.% chloroplatinic acid dispersed in short-chained siloxanes) were added to the composition. The material was compression-molded at in a die fitted with a Teflon™ release liner and allowed to cure for 10 minutes at 150°C. under 400 psi (2.75e06 Pa) pressure, which resulted in a slab 0.070 inch (1.78 mm) thick.

An identical slab of Silastic® Liquid Silicone Rubber 9280-50, a commercially available "clear" silicone elastomer (from Dow Corning Corporation of Midland, MI,) was compression-molded under identical conditions as a comparative sample. Silastic® Liquid Silicone Rubber 9280-50 is a silica-filled, vinyl-functional cross-linked silicone fluid, much like V-Fluid3.

A square sample 1 X 1 inch (2.54 X 2.54 cm) was cut from each of the cured slabs. A color spectrophotometer equipped with a spherical integrating light intensity detector (model no. 2020 from Macbeth division of Kollmorgen Instruments Corp. of New Windsor, NY) was used to determine the optical clarity of the slabs. The spectrophotometer directs a pulsing light at the sample surface in an enclosed chamber. The intensity of the reflected light is measured as an indication of optical clarity, lower values representing greater relative clarity.

For calibration, the light is first directed at piece of black paper, and the intensity of reflected light is measured as a reference standard, assumed to have 0% reflectance. Thereafter, the light is directed at a piece of white paper to establish a reference standard assumed to have 100% reflectance. Finally, the sample slabs were placed in front of the black paper background and the intensity of the reflected light was measured for each. The Silastic® Liquid Silicone Rubber 9280-50 showed 2.3% reflectance while the silicone resin/fluid alloy of the invention showed 0.8% reflectance, a significant improvement in clarity. This numerical determination of clarity is consistant with visual assessments of the samples.

The mechanical properties of Alloy Example No. 42 and the Silastic® Liquid Silicone Rubber 9280-50 are:

| | Alloy Example No. 42 | Silastic® 9280-50 |
|---|---|---|
| Tensile Strength (Pa) | 6.24e06 | 8.00e06 |
| Tear Strength (N/m) | 1,751 | 4,465 |
| G" (Pa) | 2.36e06 | 1.77e05 |
| tan ($\delta$) | 0.17 | 0.08 |

Thus, the mechanical properties of the silica-filled Silastic® Liquid Silicone Rubber of the prior art do not meet the criteria for toughness imposed by the claim limitations of the present invention for use over a predetermined service temperature range that encompasses room temperture. Thus, the shear loss modulus and loss tangent of composition of the prior art are well below the minimums exhibited by the compositions of our invention. Nonetheless, the silica-filled system did exhibit reasonable ultimate tensile and tear strength. It is believed that the silica filler was responsible for these anomalies.

Thus, the mechanical properties of the compositions of the invention, i.e., a silicone resin/fluid alloy, were compared directly with a cross-linked V-Fluid3, without the addition of silica. A blend of 45 g of V-Fluid3, 0.16 g of the aforementioned cross-linker, 0.01 g etch inhibitor and 0.05 g Pt catalyst were compression-molded as previously described, which effectively rendered a silica-free version of Silastic® Liquid Silicone Rubber 9280-50. Clarity measurements and mechanical testing were performed on the compression-molded silica-free formulation. The results are:

| | Silica-free Silastic® Liquid Silicone Rubber 9280-50. |
|---|---|
| Tensile Strength (Pa) | 3.10e04 |
| Tear Strength (N/m) | 875 |
| G" (Pa) | 1.65e05 |
| tan (δ) | 0.02 |
| reflectance | 0.2% |

From the above data, it is absolutely clear that the silica, in the Silastic® Liquid Silicone Rubber 9280-50 is responsible for imparting that prior art composition with relatively high ultimate tensile strength and tear strength. To do so, however, optical clarity must be sacrificed.

These results should be compared with the properties of the silicone resin/fluid alloy compositions of the present invention. In accordance therewith, high values of ultimate tensile strength, tear strength, loss shear modulus and loss tangent are attainable, without any attendant loss of optical clarity.

## Claims

**1.** A method of making a silicone resin/fluid alloy that exhibits high strength and toughness over a predetermined service temperature range having a lower limit of not less than -120°C. and an upper limit not greater than 250°C., said method comprising the steps of:

(I) blending, to substantial homogeneity,

(A) an organosilicone resin of the empirical formula

$$[R_3SiO_{1/2}]_a[R_2SiO_{2/2}]_b[RSiO_{3/2}]_c[SiO_{4/2}]_d$$

wherein: a, b, c and d are positive numerical values with the provisos that $a + b + c + d = 1$ ,

$$1/2(b + c + d) \leq a \leq (b + c + d) \text{ and } 0 \leq (b + c)/d \leq 0.2;$$

R is a monovalent radical independently selected from the group consisting of hydrogen, hydroxyl, alkyl, alkenyl, alkoxy, oximo, aryl, epoxide, carboxyl, ether, amide and alkyl amino radicals, which R groups may be the same or different, with the proviso that at least sixty mole percent of said R radicals are methyl; the organosilicone resin (A) has a number average molecular weight (Mn) between 2,000 and 7,000; and

(B) a predominantly linear silicone fluid having the empirical formula

$$[R'_3SiO_{1/2}]_x[R'_2SiO_{2/2}]_y[R'SiO_{3/2}]_z$$

wherein: x, y and z are positive numerical values with the provisos that $x + y + z = 1$ and $y/(x + y + z) \geq 0.9$ ; and R' is a monovalent radical independently selected from the group consisting of hydrogen, hydroxyl, alkyl, alkenyl, alkoxy, oximo, aryl, epoxide, carboxyl, ether, amide and alkyl amino radicals, which R' groups may be the same or different, with the proviso that at least ninety mole percent of said R' radicals are methyl;

said organosilicon resin (A) being present in an amount of 45 to 80 parts by weight and said predominantly linear silicone fluid (B) being present in an amount of 55 to 20 parts by weight, per 100 parts, by weight of the combined total of (A) and (B);

(II) cross-linking the substantially homogeneous blend of (A) and (B) produced in step (I) with a cross-linker (C);

said cross-linker having at least three functional groups associated therewith, which functional groups render said cross-linker copolymerizable with said organosilicone resin (A) and said predominantly linear silicone fluid (B);

said cross-linking step being carried out to a predetermined cross-link density such that the cross-linked product of (A) and (B), when free of an inorganic filler, exhibits the following mechanical properties over the predetermined service temperature range: an ultimate tensile strength greater than or equal to $2.75 \times 10^6$ Pa (400 psi); a shear loss modulus G" greater than or equal to $10^6$ Newtons per $m^2$; and a loss tangent (tan $\delta$) greater than or equal to 0.10.

**2.** A method in accordance with claim 1 wherein a predetermined number average of said R radicals per molecule (rRn) of said organosilicone resin (A) are reactive with said functional groups of said cross-linker (C) so as to render said organosilicone resin (A) copolymerizable with said cross-linker (C) and said predetermined number average of R groups limits the predetermined the cross-link density.

**3.** A method in accordance with claim 1 wherein a predetermined number average of said R' radicals per molecule (rR'n) of said predominantly linear silicone fluid (B) are reactive with said functional groups of said cross-linker (C) so as to render said fluid (B)) copolymerizable with said cross-linker (C) and said predetermined number average of R' groups limits the predetermined the cross-link density.

**4.** A method in accordance with claim 1 wherein said cross-linking step is carried out to said predetermined cross-link density by limiting the amount of cross-linker used.

**5.** A silicone resin/fluid alloy composition that exhibits high strength and toughness over a predetermined service temperature range having a lower limit of not less than -120°C. and an upper limit not greater than 250°C., said silicone resin/fluid alloy composition comprising:

(A) an organosilicone resin of the empirical formula

$$[R_3SiO_{1/2}]_a[R_2SiO_{2/2}]_b[RSiO_{3/2}]_c[SiO_{4/2}]_d$$

wherein: a, b, c and d are positive numerical values with the provisos that $a + b + c + d = 1$ ,

$$1/2(b + c + d) \leq a \leq (b + c + d) \text{ and } 0 \leq (b + c)/d \leq 0.2;$$

R is a monovalent radical independently selected from the group consisting of hydrogen, hydroxyl, alkyl, alkenyl, alkoxy, oximo, aryl, epoxide, carboxyl, ether, amide and alkyl amino radicals, which R groups may be the same or different, with the proviso that at least sixty mole percent of said R radicals are methyl; and the organosilicone resin (A) has a number average molecular weight (Mn) between 2,000 and 7,000; and
(B) a predominantly linear silicone fluid having the empirical formula

$$[R'_3SiO_{1/2}]_x[R'_2SiO_{2/2}]_y[R'SiO_{3/2}]_z$$

wherein: x, y and z are positive numerical values with the provisos that $x + y + z = 1$ and $y/(x + y + z) \geq 0{:}9$ ; and R' is a monovalent radical independently selected from the group consisting of hydrogen, hydroxyl, alkyl, alkenyl, alkoxy, oximo, aryl, epoxide, carboxyl, ether, amide and alkyl amino radicals, which R' groups may be the same or different, with the proviso that at least ninety mole percent of said R' radicals are methyl;

said organosilicon resin (A) being present in an amount of 45 to 80 parts by weight and said predominantly linear silicone fluid (B) being present in an amount of 55 to 20 parts by weight, per 100 parts, by weight of the combined total of (A) and (B);

(C) a predetermined quantity of a cross-linker having at least three functional groups per molecule;

a predetermined number average of said R radicals per molecule (rRn) of said organosilicone resin (A) being reactive with said functional groups of said cross-linker (C) so as to render said organosilicone resin (A) copolymerizable with said cross-linker (C);

a predetermined number average of said R' radicals per molecule (rR'n) of said predominantly linear silicone fluid (B) being reactive with said functional groups of the cross-linker (C) so as to render the predominantly linear silicone fluid (B) copolymerizable with the cross-linker (C); and

the respective predetermined number averages rRn and rR'n and the predetermined quantity of the cross-linker being selected such that: the silicone polymer alloy composition, when cross-linked and free of an inorganic filler, exhibits the following mechanical properties over the predetermined service temperature range: an ultimate tensile strength greater than or equal to $2.75 \times 10^6$ Pa; a shear loss modulus G" greater than or equal to $10^6$ Newtons per $m^2$; and a loss tangent, tan ($\delta$) greater than or equal to 0.10.

6. A composition in accordance with claim 5 wherein rRn is between 1 and 6, inclusive.

7. A composition in accordance with claim 5 wherein rR'n is at least 2.

8. A composition in accordance with claim 7 wherein the number average of [$R'_2SiO_{2/2}$] units between said at least two R' that are reactive with said functional groups of said cross-linker (C) defines a nonfunctional linear chain length and said number average nonfunctional linear chain length is between 100 and 10,000.

9. A composition in accordance with claim 8 wherein rRn is between 1 and 2.5 and said number average nonfunctional linear chain length of said predominantly linear silicone fluid (B) is between 100 and 400.

10. A composition in accordance with claim 8 wherein rRn is between 2.5 and 4 and said number average nonfunctional linear chain length of said predominantly linear silicone fluid (B) is between 400 and 2,500.

11. A composition in accordance with claim 5 further comprising a catalyst (D), said catalyst being provided in an amount sufficient to cause accelerated copolymerization between said organosilicone resin (A), said silicone fluid (B) and said cross-linker (C).

12. A composition in accordance with claim 11 further comprising: a platinum catalyst (D); said at least three functional groups of said cross-linker (C) being silicon-bonded hydrogen; said R radicals of said organosilicone resin (A) that are reactive with said at least three functional groups of said cross-linker (C) being vinyl radicals; and said R' radicals of said silicone fluid (B) that are reactive with said at least three functional groups of said cross-linker (C) being vinyl radicals.

13. A composition in accordance with claim 12 further comprising a catalyst inhibitor (E).

14. A composition in accordance with claim 5 further exhibiting optical clarity characterized by a reflectance of 2% or less.

15. A composition in accordance with claim 5 wherein said cross-linker is provided in an amount less than that required for stoichiometric reaction between the functional groups thereof and said R groups and R' groups that are reactive therewith.

European Patent Office

# EUROPEAN SEARCH REPORT

Application Number
EP 96 11 4513

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 601 938 (RHONE-POULENC)<br>* claims 1,5 * | 1-15 | C08L83/04 |
| X | EP-A-0 614 959 (GENERAL ELECTRIC)<br>* page 1; claim 1 * | 1-15 | |
| X,D | EP-A-0 393 426 (GENERAL ELECTRIC)<br>* claim 1 * | 1-15 | |
| X,D | US-A-5 034 061 (MAGUIRE ET AL)<br>* claim 1 * | 1-15 | |

TECHNICAL FIELDS SEARCHED (Int.Cl.6)

C08L

The present search report has been drawn up for all claims

| Place of search | Date of completion of the search | Examiner |
|---|---|---|
| THE HAGUE | 14 January 1997 | Lentz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)